(19) Europäisches Patentamt
European Patent Office
Office européen des brevets

(11) **EP 4 692 855 A1**

(12) **EUROPEAN PATENT APPLICATION**

(43) Date of publication:
**11.02.2026 Bulletin 2026/07**

(21) Application number: **24382890.2**

(22) Date of filing: **07.08.2024**

(51) International Patent Classification (IPC):
**G01S 19/14** (2010.01)   **G01S 19/42** (2010.01)
**G01S 19/43** (2010.01)   **G01S 5/02** (2010.01)
**G01S 3/04** (2006.01)   **A63B 29/02** (2006.01)
**G01V 3/08** (2006.01)   **G01V 3/10** (2006.01)
**G01V 3/165** (2006.01)

(52) Cooperative Patent Classification (CPC):
**G01S 5/02; A63B 29/021; G01S 3/04; G01S 19/14;**
**G01S 19/42; G01S 19/43; G01V 3/081; G01V 3/10;**
**G01V 3/165;** A63B 2220/12; A63B 2220/13;
A63B 2220/16; A63B 2220/40; A63B 2220/89;
A63B 2225/20;                                    (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Consejo Superior de Investigaciones**
**Cientificas**
**28006 Madrid (ES)**

(72) Inventor: **SOLÁ ORTEGA, Joan**
**08028 BARCELONA (ES)**

(74) Representative: **Herrero & Asociados, S.L.**
**Edificio Aqua - Calle Agustín de Foxá, 4-10, 2ºA**
**28036 Madrid (ES)**

(54) **METHOD, DEVICE AND SYSTEM FOR IMPROVED AVALANCHE VICTIM LOCATION**

(57)     It is presented a method, device and system for detecting buried persons (e.g. avalanche victims), which allow a precise and fast detection of the buried victims, automatically computing the victim's location with minimal rescuer intervention. In order to do that, the proposed device incorporates new type of measurements to the detection tasks and it is proposed a method to accurately estimate the location victim from said measurements.

EP 4 692 855 A1

FIG. 4

(52) Cooperative Patent Classification (CPC): (Cont.)
    A63B 2225/50

**Description**

**TECHNICAL FIELD**

The present invention relates to a method, device and system for detecting avalanche victims and more generally speaking, for detecting buried persons. In particular, it refers to a method, device and system to detect buried bodies using RF (radiofrequency) electronic devices, in a more accurate, faster and simpler way than the existing solutions.

**BACKGROUND**

People who practice winter mountain sports, for security reasons, usually carry an Avalanche Transceiver (AT) device, also known as Avalanche Beacon or ARVA (from "Appareil de Recherche de Victime d'Avalanche", "Apparatus for searching of avalanche victims" in English) for locating avalanche victims. This RF transceiver operates at 457kHz, emitting short pulses every second, as specified in ISO standard ETSI EN 300 718-1.

Initially, all users set their devices to transmission mode. If an avalanche occurs, the survivors switch to receiving mode to locate victims by analyzing the received signals, ultimately saving lives. Currently, rescuers must follow a detailed process to locate a victim, which can be slow and error-prone, especially for inexperienced rescuers - which is often the case. Delays in locating victims significantly reduce survival chances, which drop rapidly after 10 minutes of burial. Reducing the decision-making burden on rescuers can improve search times and survival rates.

Since each AT device can be set in transmission mode and in receiving mode, we refer hereafter to the transmitter and receiver as two different AT devices, one in transmission mode and one in reception mode, respectively.

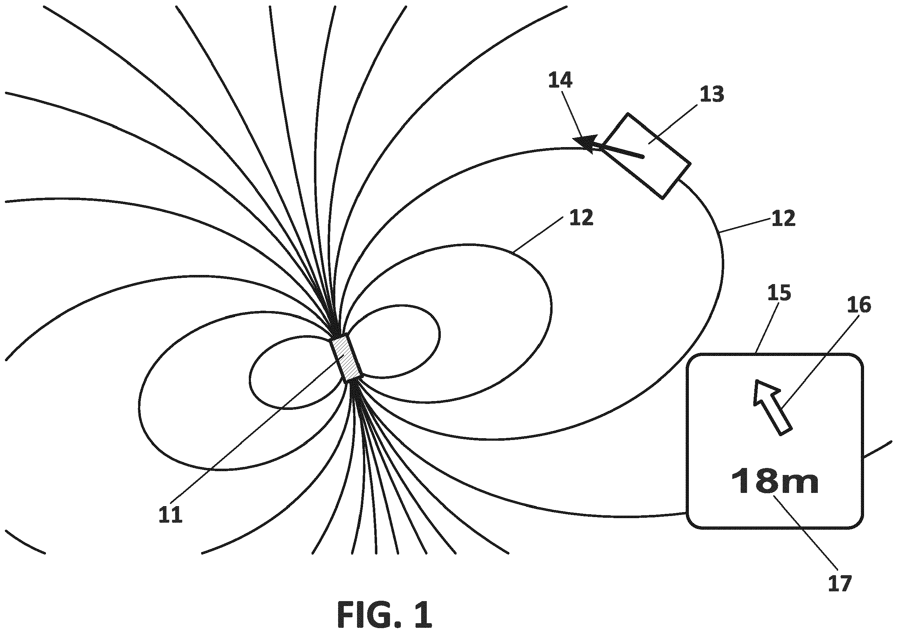

The state of the technique for finding the victim using the AT device based on following a magnetic field line, is described hereafter and shown in figure 1. A transmitter also called emitter (11), attached to the body of the buried victim, emits pulses of magnetic field, approximately once per second. The produced magnetic field (magnetic field 12) spreads out from the emitter with a shape defined by the equations of the magnetic dipole, which is well-known from physics. The field lines describe concentric curves, all of them passing over the emitter antenna. A receiver (13), carried by the rescuer, measures this magnetic field, resulting in a local measurement (14). The screen of the receiver (15) indicates the (local) direction (16) of this field line (using an arrow). The screen also displays a number (17) representing a coarse approximation of the distance to the victim (in this case 18 m), which is calculated from the strength of the measured magnetic field (14). To approach to the victim, the rescuer walks in the direction of the arrow (direction 16) and by doing so the indicated distance decreases. Notice that the direction of the arrow (16) is not pointing in a straight line to the victim, but rather in the direction of the local field measurement (14). The figure represents the situation in 2D, but the same applies to the case in 3D.

This classical methodology has some disadvantages:

- The path followed by the rescuer is a curved line. This path is longer than an optimal straight line towards the victim.
- The rescuer does not know where the victim is. Due to the curvature of the field line, he/she cannot know either in which direction the victim is. He/she only knows a local direction to walk to, and an approximation of the distance to the victim. Under these conditions, a searching strategy other than following the curved path is not possible.
- The measurement of the direction and field strength is always local. Two measurements in different positions cannot be related to each other. This means that it is not possible to aggregate different measurements to infer, from some appropriate geometric considerations, the location of the victim. Also, improvement of the accuracy of the displayed information by inclusion of prior measurements is not possible.

When the searcher reaches the vicinity of the victim, that is at a distance below approximately 3 m, the magnetic field direction method becomes unreliable. A final search based solely on field strength is necessary, called cross search. Cross search consists in finding the minimum distance (i.e. maximum signal strength) in one direction, then from the point of minimum distance, searching again perpendicularly to the previous direction for a new minimum distance, and iterating a few times.

Once the strongest signal (that is, the minimal reported distance) is located, the rescuer sets a mark on the terrain. From this moment onwards the device can no longer help. In order to accurately locate the victim, a final step consists in probing with a long stick or probe. This is necessary to ultimately enter in contact with the buried victim. This probing is performed at points defining a square grid each approximately 25cm. The probing points are explored in an outward spiral from the location marked at the conclusion of the cross search.

This again has some disadvantages:

- The rescuer needs to take care to not rotate the receiver during cross search, since otherwise the measurements are flawed and the process fails. In the likely case of high stress, the rescuer feels unsure of his/her decisions and may have to start over a few times. This represents a significant loss in time and energy, loss of confidence and further raise of stress.

- Due to the anisotropic nature of the magnetic field, the maximum field strength is not situated just above the victim, nor on its projection perpendicular to the ground, but somewhere else depending on the orientation of the emitter's antenna. This produces a final result that can deviate from the true location by as much as 1,5m, depending on the burial depth.
- The estimation of the victim's depth during cross search is only approximately based on field strength. Again, since the orientation of the emitter antenna is unknown, this estimate can be off by as much as 100% of the reported value. The final depth can only be accurately determined by the probing phase.
- The probing phase may require a large number of probing points due to the low accuracy of the cross search. This again increases both the search time and the stress experienced by the rescuer.

Due to its multiple disadvantages, the classical procedure using AT apparatus has been improved in recent solutions. The main idea for improving on the classical solution is to provide the system with a richer set of measurements.

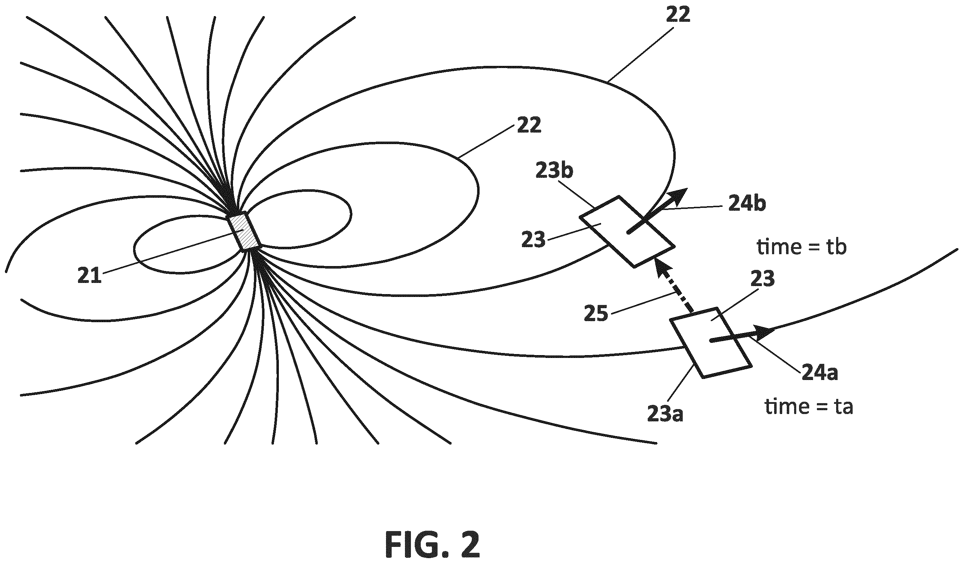

Particularly advantageous is the inclusion of measurements related to of the positions and/or displacements of the receiver during the search. The improved solution is illustrated in figure 2. An emitter (21) emits pulses of magnetic field (for example once per second). The produced magnetic field (22) spreads out from the emitter with a shape defined by the equations of the magnetic dipole, which is well-known from physics. A receiver (located at position 23a at time ta, and at position 23b at a later time tb), measures this magnetic field at each position, resulting in measurements 24a and 24b respectively. If the receiver (23) has the means of measuring some magnitude related to its own displacement and rotation (25) from time ta to tb, then from aggregation of the measurements 24a, 24b of the magnetic field and the measure of the displacement (25), and from the knowledge of the shape of the magnetic field (22), the receiver unit can compute the location and magnetic moment of the emitter (21), relative to the current location and orientation of the receiver (23b). Figure 2 represents the situation in 2D, but the same applies to the case in 3D. It is important to say that this calculation can be made before the rescuer reaches the location of the victim, that is, from a distance, providing early high-value information to the rescuer (which improves the accurateness and velocity of the detection), thereby improving his/her confidence and reducing his/her stress.

Depending on the nature of such measurements, more than two measurement points might be necessary to achieve observability of the emitter's position. This is not a problem, since such measurements are available usually every one second approximately, so this solution is providing location results after only a very few seconds of operation. Moreover, the accuracy of the solution can improve as more measurements of types 24a and 24b (magnetic field) and 25 (displacement) are aggregated.

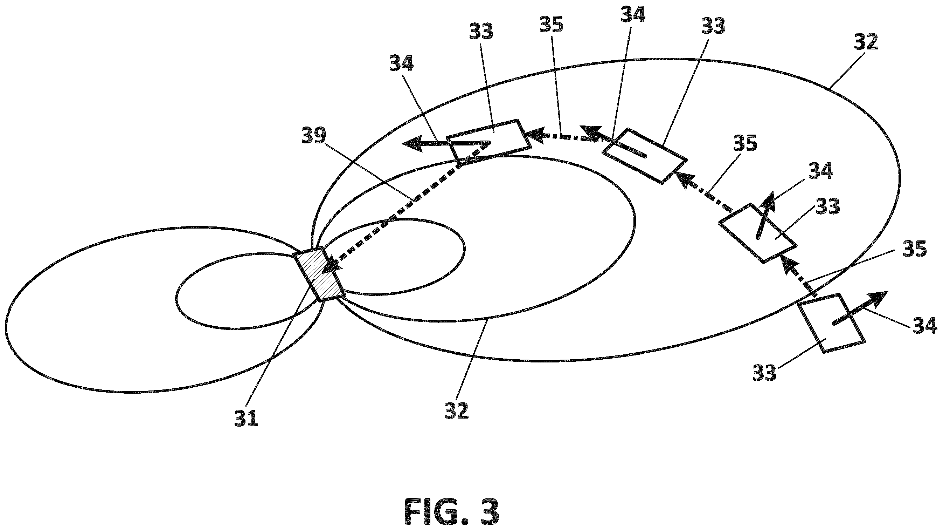

In Figure 3, it is illustrated this case. The receiver (33) collects successive measurements (34) of the magnetic field (32), and successive measurements (35) between positions of the receiver. After a few seconds, the full set of measurements of the types 34 and 35 is used to calculate the location of the emitter (31) and the magnetic vector of the antenna. Increasing the number of measurements used, the accuracy of the solution gets progressively better. Also, as the rescuer can be directed towards the victim in a straight line, measurements will get progressively stronger, thereby further improving the accuracy of the computed victim's location.

By aggregating more measurements of magnetic field (34) and receiver displacement and rotation (35) from more successive receiver locations, the receiver can progressively improve the accuracy of the location of the emitter (31). Moreover, if the receiver is directed to move towards the computed location of the emitter, then the distance from the emitter to the receiver decreases, and therefore the magnitude of the magnetic field gets progressively stronger, thereby increasing the signal-to-noise ratio of the measurements. This results in a further improvement of the accuracy of the computed location of the emitter respective to the receiver.

There are not many relevant published proposals for such an improved receiver using some kind of augmented measurements. Here, some of them are listed together with their characteristics and the disadvantages of each solution.

US Patent US9310460 B2 uses a compass or a gyrometer to assess the change in orientation of the receiver between consecutive magnetic measurements. Since this is not sufficient to unlock observability of the transmitter's location, it also relies on an extra constraint on the trajectory that must be followed by the rescuer (either following the magnetic field line, or a straight line). That is the solution proposed by this document, only measures the orientation change, but it does not measure position, and it does not measure displacement. Then, it imposes to the user (the rescuer) that his displacement follows a certain direction.

This solution has two main disadvantages: 1) The distance between two magnetic field measurements cannot be measured and 2) The satisfaction of the constraint on the trajectory followed requires that the rescuer (a highly stressed human being) performs such a trajectory as indicated by the instructions provided on the receiver's screen. This is inaccurate and error prone.

Scientific article "Localization of avalanche victims using robocentric SLAM," 2006 IEEE/RSJ International Conference on Intelligent Robots and Systems, by P. Pinies et al., proposes to integrate the measurements of acceleration and angular rates provided by an inertial measurement unit to produce a measurement of displacement. This solution has two main disadvantages: 1) It is known that the integration of inertial measurements is subject to significant drift and is therefore very inaccurate. 2) A system relying only on the fusion of magnetic field measurements and inertial measurements is very fragile and the convergence of the computing algorithms is very difficult to assess. A non-convergent algorithm results in absolutely aberrant solutions, providing more harm than benefit. Therefore, this constitutes a non-robust solution, which is not acceptable for a life-saving device.

A clear indication of the drawbacks of the aforementioned proposals is the absence of any market products implementing these solutions.

Hence, a new solution is necessary, which allows a precise and fast detection of buried victims, solving the drawbacks of the prior art solutions. The solution proposed hereby addresses these issues by automatically computing the victim's location with minimal rescuer intervention, determining the transmitter's location well before physical contact, that is, from a distance. This early and accurate information reduces rescuer stress and speeds up the rescue process, allowing rescuers to reach and unbury victims more quickly. This literally saves lives.

## SUMMARY

The disclosed embodiments provide a method, device and system for detecting avalanche victims and more generally speaking, for detecting buried persons using RF (radiofrequency) devices, solving the problems and limitations of the existing solutions.

In order to achieve this, the present invention incorporates at least the following set of measurements to the task of detecting buried person:

- 3D magnetic field measurements tuned at the frequency of the pulses transmitted by the buried person's device (typically 457kHz).
- 3D inertial measurements provided by 3D accelerometer, 3D gyrometer, and optionally 3D Earth magnetometer, obtained with an Inertial Measurement Unit (IMU).
- Raw carrier phase GNSS (Global Navigation Satellite System) measurements (for accurate relative translation), processed with the time-differenced carrier phase (TDCP) method.
- Classical GNSS fix measurements (for coarse absolute position).

The proposed invention also provides a novel and inventive method to estimate the victim's location relative to the rescuer's, which makes the detection faster and more accurate. This combination of measurements and the method used, improves the observability, accuracy and robustness compared to the previous solutions. The present invention offers, at least, the following advantages:

- The advantages of using a richer set of measurements:

  ○ Rescuer is directed towards the victim in a straight line.
  ○ The reported distance is accurate.
  ○ The rescuer is informed of the victim-s location at an early stage, improving confidence and reducing stress.
  ○ The receiver's display can show an 3D equivalent image of the position of the buried victim in real time. This 3D view is such that the victim appears on the screen as the rescuer points at it, like if the device were a camera that could "see" the victim beneath the snow.
  ○ The cross search phase is not required.
  ○ The final victim's location calculation includes depth.

- The computations made by the device require no user intervention or expertise. They free the user from having to perform informed non-intuitive actions or maneuvers, greatly improving reliability and accuracy and reducing stress and search time.
- The adoption of IMU measurements allows for a precise computation of the receiver's orientation, necessary to free the rescuer from operating the device in a particular orientation.
- The adoption of time-differenced carrier phase (TDCP) techniques for treating the carrier-phase measurements of the GNSS provide centimeter-level accuracy on the receiver's displacements. The centimeter-level accuracy of the receiver's displacement allows for a centimeter-level accuracy of the transmitter's location relative to the receiver at the end of the search.
- The inclusion of global GNSS positioning allows for a proper log of the successive rescuer's locations, preventing the rescuer from having to visit already scanned areas, thereby reducing the chances of rescanning areas and losing time.
- The inclusion of global GNSS positioning also allows for the computation of the victim's location in global coordinates.

This global location can be sent to remote rescue teams if necessary, through an optional wireless connection.

- The possibility to operate jointly with other devices of the same kind (establishing a wireless communication channel to connect the devices). This allows for a second set of receiver nodes, and therefore a faster and more accurate localization using multiple devices. Useful when there is more than one rescuer.
- The possibility to transmit the information to mobile devices such as nearby phones or tablets. This can be used by teams to centralize and coordinate rescue operations.

None of these features is available in any of the devices offered by the existing solutions today.

These and other aspects and advantages of the invention will be apparent from and elucidated with reference to the embodiments described hereinafter.

According to a first aspect of the invention, it is presented a method for detecting a buried victim, the method being performed by a receiver electronic device, and comprising the following steps:

a) Measuring (at the current position of the receiver):

a1) In three orthogonal directions of a local reference frame (attached to the receiver), a radiofrequency, RF, signal received from a transmitter electronic device attached to or carried by the buried victim (generally speaking, a transmitter device located in the buried victim or close by), by an antenna of the receiver. This can be done with any periodicity, for example approximately once per second;

a2) The current location of the receiver, by a GNSS device located in the receiver, in a global reference frame (attached to the Earth);

a3) The raw carrier phases of the satellite signals received, by a GNSS device located in the receiver. a2) and a3) measurements can be done with any periodicity for example, one time per second (as the measurements of a1) or can be done with a higher periodicity, for example, up to ten times per second;

a4) Acceleration and angular rate in the three orthogonal directions (i.e. 3D acceleration and 3D angular rates) by an Inertial Measurement Unit, IMU, with 3 accelerometers and 3 gyroscopes, located in the receiver, in the local reference frame of the receiver. This can be done with any periodicity, for example, one time per second (as the measurements of a1), but it may be done with a higher periodicity, for example, up to one hundred times per second;

b) From the (unprocessed or raw) measurements obtained in step a), calculate the following parameters: From the measurements made in step a1), obtain the 3D (in three orthogonal directions) magnetic field vector in the local reference frame; from the measurements made in step a2) obtain the 3D position of the receiver in the global reference frame (i.e. in global coordinates); from the measurements made in step a3), obtain 3D position increment of the receiver in the global reference frame by applying a time-differenced carrier phase, TDCP, technique to the raw carrier-phase measurements taken at the current position and at a previous position of the receiver; from the measurements made in step a4) obtain 3D position and velocity increments of the receiver and 3D orientation increment (between two consecutive epochs, two consecutive positions of the receiver where measurements have been taken) of the receiver in the local reference frame, applying for example appropriated techniques (known as "IMU preintegration" in the field of inertial navigation) to the IMU measurements;

c) Taking into account the value of the parameters obtained in step b) for the current position and for previous positions of the receiver, perform optimal sensor fusion (an optimization process based on information provided by different sensors or, generally speaking, information from different sources) to obtain at least an optimal estimation of the position of the transmitter and of the position and orientation of the receiver. This can be done by applying an iterative optimization process (algorithm), in the form for example of nonlinear least-squares, factor graphs or Kalman filtering (these are non-limitative examples and other optimization techniques to perform sensor fusion can be used);

d) From said optimal estimation, calculate the estimated position of the transmitter relative to the receiver and, based on said estimated position, calculate and display in the receiver one or more of the following: position of the transmitter relative to the receiver in the horizontal plane or in 3D, estimated distance from the receiver to the transmitter, estimated straight line direction of the transmitter relative to the receiver and depth of the transmitter;

e) If it is determined that the detection has not stopped, once a certain pre-established time has passed (epoch time, e.g. 1 second), repeat the method from step a). In other words, the method is repeated periodically (in different positions of the receiver device, because the rescuer is moving so, when the estimation method is repeated, he is in a different position). Each period is called an epoch.

The iterative optimization process may be based on minimizing the residual (error) between the parameters calculated in step b) and expected values of said parameters obtained through (mathematical) models which estimate the values of said parameters based on estimated positions of transmitter and receiver. For example, the optimization process may be a non-linear least squares optimization.

In an embodiment, if the number of epochs (or in other words, different positions where the receiver has taken measurements (step a)), is less than N, all the previous measurements of the receiver are taken into account in step c). Otherwise, only the N-1 previous epochs (positions) are taken into account in step c), where N is a design parameter.

In an embodiment, parameters received (through a wireless communication network), containing measurements from other receiver electronic devices also receiving the RF signal from the transmitter, are taken into account for obtaining the parameters values in step b) and/or in the optimization process of step c).

When the method is repeated from step a), the receiver has been moved (by the rescuer carrying the receiver) to a different position, usually, based at least on the information displayed in the receiver (that is, the rescuer usually moves based on the estimated position of the victim displayed in the receiver).

In an embodiment, the estimated magnetic moment of the transmitter is also obtained by applying the optimization process in step c).

The RF signal is preferably transmitted periodically by the transmitter carried by the buried victim. This signal transmitted by the transmitter and received by the antenna may be at 457 KHz (that is, the transmitter is an AT transmitter).

In an embodiment, it is determined that the detection continues, if the receiver user has not ordered the receiver to stop the detection (through the user interface of the receiver).

In an embodiment, the information calculated in step d) is sent to other electronic devices (for example, mobile phones of members of the rescue team or to relatives of the victim) through a wireless communications network.

The receiver antenna may comprise 3 orthogonally-oriented wire coils over one unique ferrite nucleus or over three separate and orthogonally-oriented ferrite nuclei.

In an embodiment, when the distance is more than a pre-established threshold, 2D representation of the estimated position is displayed and, otherwise, 3D representation of the estimated position is displayed. Virtual objects of known size (e.g. a sphere of known diameter) can be displayed on the screen at the appropriate size following the inverse distance law, visually indicating to the user the proximity to the receiver under the snow.

According to a second aspect of the invention, it is presented a device to implement the above stated methods. Specifically, it is proposed a electronic device (a receiver) for detecting a buried victim, the device comprising:

An antenna configured to measure a signal received from a transmitter carried by the buried victim, in three orthogonal directions of a local reference frame;

A GNSS device configured to measure the current location of the receiver and the raw carrier phase of the satellite signals received;

An IMU, comprising 3 accelerometers and 3 gyroscopes, configured to measure acceleration and angular rate in the three orthogonal directions of the local reference frame;

An electronic processing unit (e.g. a CPU) configured to perform the following tasks:

- Calculate the value of the following parameters (also called variables):
  From the measurements provided by the antenna, the 3D magnetic field vector in the local reference frame; from the measurements provided by the GNSS device, 3D position of the receiver in a global reference frame and 3D position increment of the receiver in the global reference frame by applying a time-differenced carrier phase, TDCP, technique to the raw carrier-phase measurements taken at the current position and at a previous position of the receiver; and, from the measurements provided by the IMU, made in step a4) obtain 3D velocity increment of the receiver and 3D orientation increment of the receiver in the local reference frame;
- Taking into account the values of the parameters obtained for a current position and previous positions of the receiver, apply an optimization process to obtain an optimal estimation of the position of the transmitter and the position and orientation of the receiver;
- From said optimal estimation, calculate the estimated position of the transmitter relative to the receiver and, based on said estimated position, calculate and display in the receiver one or more of the following: position of the transmitter relative to the receiver in the horizontal plane or in 3D, estimated distance to the transmitter, estimated straight line direction of the transmitter relative to the receiver and depth of the transmitter;

where the device is further configured to repeat the measurements and the above tasks, once a certain pre-established time has passed (epoch) from the taking of the measurements until the user or the device determine that detection is stopped.

According to a third aspect of the invention, it is proposed a system for detecting a buried victim, the system comprising a receiver electronic device as previously disclosed, and a transmitter electronic device (carried by the buried victim) configured to transmit periodically a RF signal.

In a last aspect of the present invention, a computer program is disclosed, comprising computer program code means adapted to perform the steps of the described method, when said program is run on processing means, said processing means being for example a computer, a digital signal processor, a field-programmable gate array (FPGA), an application-specific integrated circuit (ASIC), a micro-processor, a micro-controller, or any other form of programmable hardware. In other words, a computer program comprising instructions, causing a computer executing the program to perform all steps of the described methods, when the program is run on a computer. A digital data storage medium is also provided for storing a computer program comprising instructions, causing a computer executing the program to perform all steps of the disclosed methods when the program is run on a computer.

The invention relates to a method, system, device and a digital storage medium as defined by the independent claims. The dependent claims define advantageous embodiments.

## BRIEF DESCRIPTION OF THE DRAWINGS

To complete the description that is being made and with the objective of assisting in a better understanding of the characteristics of the invention, in accordance with a preferred example of practical embodiment thereof, accompanying said description as an integral part thereof, is a set of drawings wherein, by way of illustration and not restrictively, the following has been represented:

Figure 1 schematically shows the magnetic field lines and operation of a victim detection procedure using AT according to prior art solutions.

Figure 2 schematically shows the magnetic field lines and operation of a victim detection procedure using an improvement of the classical technique.

Figure 3 schematically shows the magnetic field lines and operation of a victim detection procedure using an improvement of the classical technique.

Figure 4 shows, in a block diagram, the different parts of the proposed device (receiver) according to an embodiment of the invention.

Figure 5 schematically shows a graph representation of the measurements obtained on a victim detection procedure according to an embodiment of the invention.

Figure 6 schematically shows a graphical representation of the variables used to detect a buried victim according to an embodiment of the invention.

Figure 7 graphically shows the evolution of the localization error using the victim detection solution, according to one embodiment of the present invention.

Figure 8 schematically shows a scenario where a victim with a transmitter is under the snow surface and a rescuer with a receiver, is looking for the victim using the device and method according to one embodiment of the present invention.

## DESCRIPTION OF EMBODIMENTS

The present invention may be embodied in other specific device, system and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The embodiments of the present invention propose a method and a receiver device for improved detection of a buried body. For this solution to work properly, it is supposed that the buried person has a transmitter device (also called transmitter) emitting periodically pulses of magnetic field (for example, an RF signal). For example, the transmitter device can be an AT device which operates at 457 kHz (this is only a non-limitative example and other type of electronic transmitting device can be used).

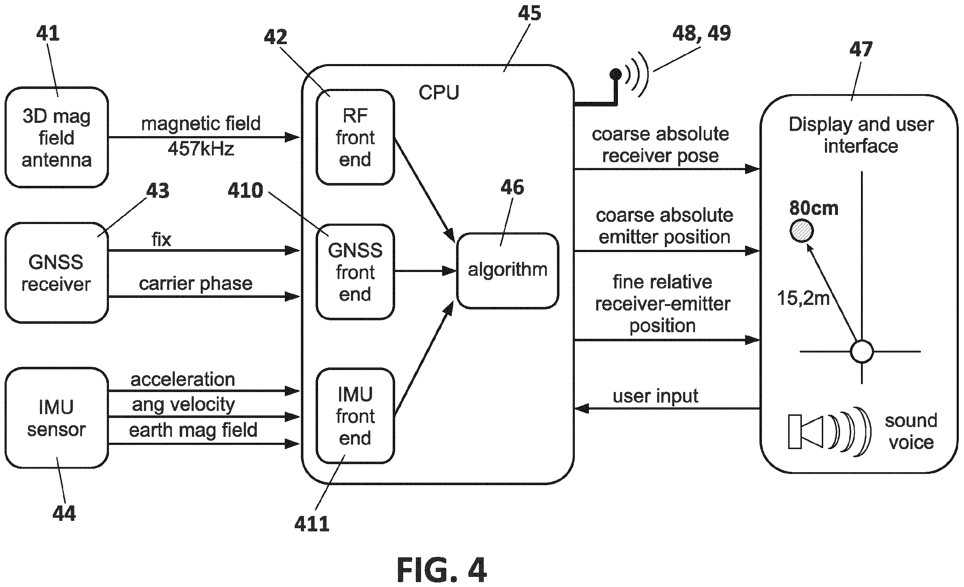

The solution proposed according to this invention comprises an electronic device and, more specifically, a receiver device (an electronic device able to receive RF signals). In an embodiment this device (illustrated in figure 4) comprises the following components, also called modules, parts or units (this is only a non-limitative example and, in other embodiments, the receiver may comprise only some of these parts or even different parts):

- At least one antenna (41), e.g. a 3D antenna, comprising 3 orthogonally-oriented wire coils for example over a ferrite nucleus, tuned at a certain frequency, which is the frequency of the signals emitted by the transmitting device (e.g. 457kHz according to ISO standard). This antenna will be able to receive the magnetic field signal, in each one of the 3 orthogonal directions, transmitted by the transmitting device.
- One coherent 3-channel RF and digital processing unit (42), able to measure the (magnetic) strength of the signal received by the antenna in each one of the 3 orthogonal directions, in the reference frame of the receiver; and to measure the relative phase between them. This unit can be a part of the receiver CPU (45).
- One GNSS (Global Navigation Satellite System) receiver (43) (also called GNSS device or only GNSS), with the capability of measuring the raw carrier phase of each satellite signal. These measurements are treated with time-differenced carrier phase (TDCP) techniques providing centimeter-level accuracy on the receiver displacements. The GNSS also supplies the absolute position of the receiver (a standard GNSS fix). So, from the GNSS receiver measurements, it is obtained the 3D GNSS global position fix for each pose and the 3D GNSS relative (TDCP) displacements between poses. In order to obtain the relative displacements, TDCP techniques are applied (410) by the CPU (45) to the raw carrier phase measurements provided by the GNSS.
- One Inertial measurement unit (IMU, 44), able to measure 3D accelerations and 3D angles (or more specifically 3D angular rates) in the 3 orthogonal directions of the reference frame of the receiver. Optionally, the IMU can also measure 3D Earth's magnetic field to be used as a 3D compass. In order to do that, the IMU will need 3 accelerometers (to measure each in one orthogonal axe), 3 gyrometers (to measure each one in one orthogonal axe) and 3 magnetometers (to measure each one in one orthogonal axe). This information will be processed (411) by the computing unit (45).
- One electronic computing unit (45), also called processing unit (it can be a central processing unit, CPU), which receives and processes the measurements and/or signals from the antenna (41) the GNSS receiver (43) and the IMU sensor (44). This CPU must have sufficient volatile and nonvolatile memory for holding data and computation results. This CPU will execute one algorithm (46) that combines the magnetic measurements from the victim's transmitter (42), the GNSS signals (43), and the IMU measurements (44) to determine, for example, at least the following magnitudes:

  ◦ The successive locations of the receiver in global GNSS coordinates (e.g. with an accuracy or 3 meters).
  ◦ The successive locations of the receiver relative to its initial location (e.g. with an accuracy of 1 centimeter). This will be done thanks to the carrier phase measurements of the GNSS.
  ◦ The 3D orientation of the receiver in the global GNSS coordinates (e.g. with an accuracy of 1 degree).
  ◦ The location of the transmitter relative to the global GNSS coordinates (e.g. with an accuracy of 5 meters).
  ◦ The location of the transmitter relative to the receiver. The accuracy of the location will improve in each epoch (that is, in each iteration of the proposed method). So, at the beginning the accuracy will be very rough (for example, of some meters), but it will improve rapidly (e.g. until an accuracy of 1cm to 10cm).
  ◦ The magnetic moment of the transmitter.

This algorithm will be explained with more detail later.

- One user interface (47) comprising at least a display, optionally with augmented reality graphics displaying the results obtained by the algorithm. This results will be for example the coarse absolute receiver position and orientation, the coarse absolute transmitter position and the fine relative receiver-transmitter position (which may be used by the rescuer to move in the shown direction to be closer to the victim in the next position). The user interface can include a speaker to emit audible signals, and optional voice instructions to the rescuer.
- Optionally, a wireless communication module (48) to establish one or more wireless communication channels in order to connect with other devices (receivers) of the same kind (using WIFI, Bluetooth, mobile networks or any other communication technology). This connection is such that it enables to apply differential GNSS techniques using the measurements from GNSS devices of the two or more receivers, achieving very high accuracy and very fast convergence rates.
- Optionally, a wireless communication module (49) to establish one or more wireless communication channels in order to communicate with nearby or remote portable devices such as mobile phones (using, for example GSM, 3G, 4g, 5G, WIFI or Bluetooth or any other communication technology). Through these communication channels the receive can send to other user devices (e.g. mobile phones) real time information about the results of the victim detection procedure.

The interaction (interconnexion) of the components of the receiver in an embodiment of the invention is shown figure 4. Basically, the CPU receives all measurements from the sensors, conditions them in some relevant way, and feeds them to the algorithm. Then, the proposed algorithm computes the results and the results are used to display information on the screen, and to produce sound and/or voice with key information and/or instructions to the rescuer.

That is, the receiver display (screen) shows graphically and/or numerically the position of the victim and related results. This may include:

a. Signal detection status (optically and acoustically).
b. Global localization of victim and rescuer, in GNSS coordinates, optionally overlaid on offline available maps (e.g. better than 5 meter accuracy).
c. Relative 3D localization of the victim with respect to the rescuer (e.g. better tan 20 centimeter accuracy).
d. Precise location of the victim with respect to the rescuer, projected to the horizontal plane.
e. Precise location of the victim with respect to the rescuer, projected to the sloped terrain's best fit plane. The terrain's best fit plane is obtained by fitting a plane to all or a part of the past positions of the rescuer.
f. Precise distance from emitter antenna (victim) to receiver antenna (rescuer).
g. Precise projection of this distance onto the horizontal plane.
h. Precise projection of this distance onto the sloped terrain's best-fit plane.
i. Precise depth of the victim with respect to the rescuer, measured along the vertical axis
j. Precise depth of the victim with respect to the rescuer, measured perpendicular to the sloped terrain's best-fit plane.
k. Precise location of the victim with respect to the rescuer, in a 3D view such that the transmitter appears on the screen as the rescuer points at it, like if the device were a camera that could "see" the victim beneath the snow.

The different sensory information is fused together to get an aggregated optimal estimate. This means that they contribute jointly to the solution, or in other words, that the joint solution is better than the sum of the parts. Therefore it is not possible to clearly establish the contribution of each sensor individually; however, it is possible to indicate some clear benefits of the sensors used, as for example:

- Raw carrier phase GNSS measurements, if processed properly with appropriated techniques (time-differenced carrier phase, TDCP, techniques), provide accurate displacement vectors between consecutive epochs (for example, every second). These displacements are referenced to the global reference system, meaning that they provide a precise globally-referenced orientation. Due to this global orientation, concatenating a number of such displacements produces trajectories with very low drift. Relative locations are therefore very accurate (for example, to 1cm). This accuracy is fundamental for the final accuracy of the relative location of the transmitter relative to the receiver, which is also of the order of the centimeter at the end of the search. This accuracy is two orders of magnitude better than that offered by the currently available devices and search methods (that is, the accuracy at the end of the cross search).
- IMU measurements, if processed properly with e.g. techniques known as IMU preintegration, provide information about the global orientation of the device. In particular, they allow for the observation of the gravity direction, thereby establishing observability of the pitch and roll angles of the device. Fusing them with GNSS data, allows for the observation of the yaw angle, thereby observing the three orientation angles of the device. This is important for two reasons: 1) The local magnetic field measurements are measured in a rotating receiver, and, in order to aggregate these measurements, the absolute 3D orientation of the device is necessary. 2) Once the victim's location is computed, knowledge of the orientation of the device is essential for displaying the transmitter's location in the receiver's screen, in a form similar to augmented reality. This allows using the receiver screen in a way similar to a camera where the transmitter is visible on the screen in real time. This view is such that the victim appears on the screen as the rescuer points at it, like if the device were a camera that could "see" the victim beneath the snow.
- Classical GNSS fixes (positions of the rescuer's device obtained from the GNSS) are important to produce global solutions for the locations of both the victim and the rescuer. This is a by-product of the proposed device, and can be exploited notably in two distinct manners: 1) Past global rescuer positions can be displayed on the screen (in e.g. the form of a track or trajectory) so that the rescuer can avoid re-visiting areas that are already scanned. This further reduces wasted time in case of confusion during the search process. 2) Global positions can potentially be sent to other devices, for example to remote rescue teams.

Now, it will be described the procedure and algorithm to accurately estimate the victim's location (or more specifically the victim's transmitter location), according to an embodiment of the present invention

In the victim's detection procedure, the rescuer or rescuer team carrying the receiver, moves and collects successive measurements (54) of the magnetic field (52) emitted by the victim's transmitter and successive location and orientation measurements of the different positions of the receiver (53). The full set of magnetic field measurements (54) and displacement measurements (55) are used to calculate the location (and magnetic moment) of the emitter (51). Increasing the number of measurements used, the accuracy of the solution gets progressively better.

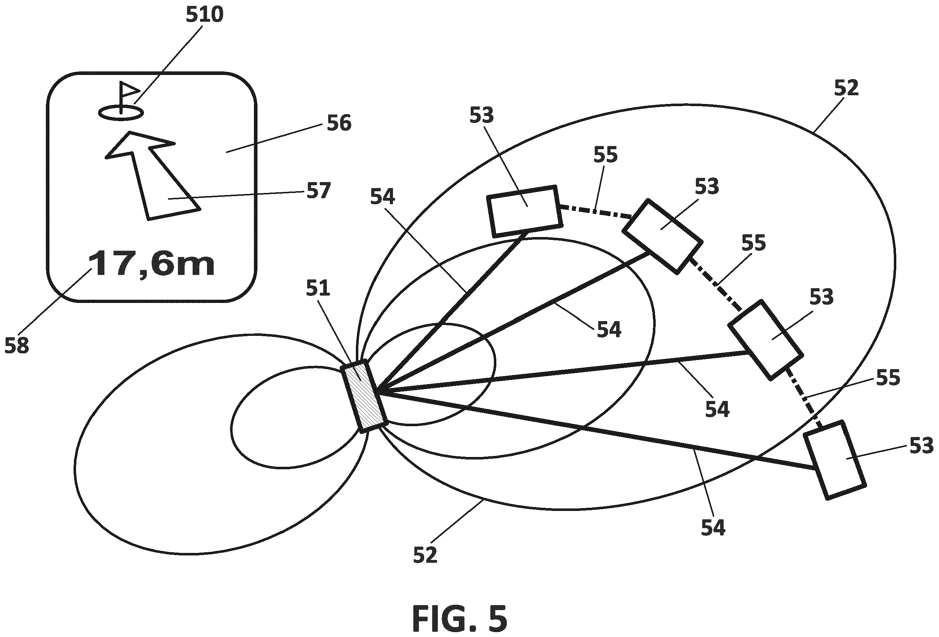

The calculation of the victim's location relative to the rescuer's, together with the knowledge of the receiver's location and orientation, can be jointly used to display a realistic view of the victim's location on the screen. This view is such that the victim (the transmitter) appears on the screen as the rescuer points at it, like if the device were a camera that could "see" the victim beneath the snow. In this manner, in Figure 5, it is shown that a display (56) indicating with a flag (510) the location of the victim, with an arrow (57) the direction to the victim in a straight line, and an accurate distance (58, in this example, 17,6m). Notice that the direction of the arrow corresponds now to the true direction to the victim in a straight line. The same applies to the accuracy of the indicated distance. Notice also that this information of the victim's location is available to the rescuer at an early stage, before the rescuer reaches the vicinity of the victim. Notice also that the accuracy of the 3D location is very high at the end of the search. This means that the phase of cross-search (previously explained for the classic technique) is now not necessary.

In an embodiment, the computation of the victim's location is based on a special implementation of least-squares optimization (as it will be later explained). A mathematical structure called factor graph can be used, which allows to illustrate the factorization of a complex function into simpler local functions.

One of this factor graphs is shown in figure 5, which advantageously represent the victim's detection situation as a graph. In this graph, the different measurements are represented as lines or edges, and the variables to be estimated as nodes, so that it is clear which magnitudes of the variables to be estimated have participated in each individual measurement. For example, each measurement (54) of the magnetic field (52) depends on the location and orientation of the transmitter antenna 51, and the position and orientation of the receiver 53.

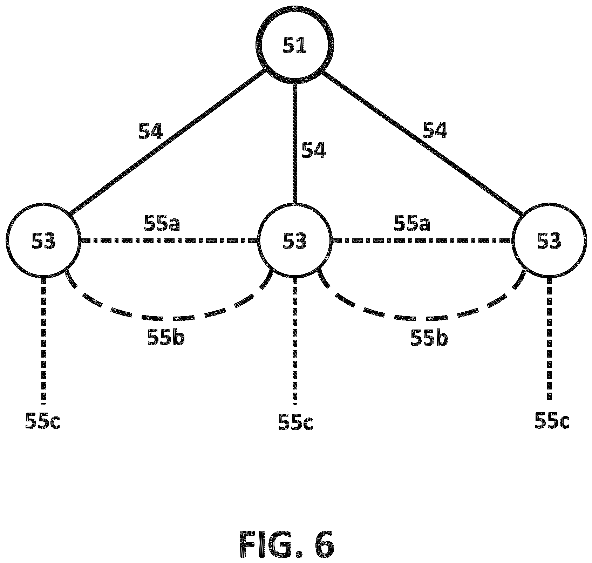

Moreover, in order to better represent the different types of measurements 55 relating the location and motion of the receiver 55, it is advantageous to improve the details of this factor graph with a more abstract factor graph representation shown in figure 6. Here, the measurements of location and displacement of type 55 are further detailed as type 55a IMU measurements (obtained after applying preintegration techniques to the IMU raw measurements), type 55b GNSS time-differenced carrier phase (TDCP) measurements and type 55c GNSS fixes (absolute position of the receiver). The variables to estimate are represented by one node of type 51 representing the transmitter's position and magnetic moment, and several nodes of type 53 representing the receiver's position and orientation at each successive epoch. Clearly, magnetic field measurements 54 depend on nodes of types 51 and 53, IMU and TDCP displacements 55a and 55b depend on pairs of consecutive nodes of type 53 (i.e. positions of the receiver in consecutive epochs), and global GNSS fixes 55c depend only on individual nodes of type 53.

This way, figure 6 shows a graphical representation of the variables to solve and the relations between them, established by the measurements of magnetic field 54, and the position and displacement measurements of type 55, consisting of IMU measurements (after preintegration) 55a, GNSS TDCP displacements 55b and GNSS fixes 55c, measured at or between consecutive receiver poses 53. In this drawing, three consecutive receiver poses 53 are considered, although typically a significantly larger number is available and preferable. The location of the victim's transmitter and its magnetic moment vector are both represented by the node 51. The optimal solution to this problem may contain the location of the transmitter expressed in two forms: one solution is relative to the receiver's reference system, and can be very accurate (for example less than 10cm). The global solution is expressed in a geostationary reference system, and can be accurate (for example to about 3m). These are only non-limitative examples and in other embodiments, the optimal solution can be expressed in different forms and/or with different accuracies.

The factor graph (figure 6) is progressively updated as new measurements are gathered. To keep the computation burden bounded, in an embodiment, the length of the trajectory formed by nodes of type 53 is limited, and after a certain graph size the oldest receiver nodes 53 (oldest receiver positions) are removed. This defines what is called a sliding window of nodes. Typical values can range from N=5 to N=50 receiver nodes (in figure 6 N=3) being N the maximum number of different positions of the receiver (where measurements have been made), which are going to be taken into account for the optimization. N is a design parameter whose final value depends on a tradeoff between accuracy and computing power. That is, when measurements have been taken in N or less than N different receiver positions, the measurements in all the previous positions are used; when measurements have been taken in more than N different positions only the N-1 previous positions (and the current position) are taken into account for the optimization.

In this context, the nodes in the graph (variables to be estimated) are called "states", and the measurement edges are called "factors".

In the case of the transmitter, the state of the node of type 51 may contain: position in 3D and optionally magnetic moment of the transmitter (orientation and strength of the magnetic dipole of the antenna).

In the case of the receiver, the states of the nodes of type 53 contain position information of the receiver. More specifically, it contains location in 3D of the receiver and optionally other information as velocity in 3D and orientation in 3D. This state will change each time the receiver moves, that is, each time the receiver takes measurements in a different position because the rescuer is moving. The 3D position of the transmitter and receiver will be obtained in the local reference frame or in the global reference frame depending on the specific implementation. In the example case explained here, they will be obtained in the global reference frame.

For notation purposes, in the following $X=(x_0,...,x_N)$ will be the set of all states, being $x_0$ the transmitter's state, and $(x_1,...,x_N)$ the set of all receiver's states, that is, the receiver state at position N (current position) and the states in the previous N-1 positions. As explained before, N is the maximum number of different positions of the receiver (epochs) which are going to be taken into account (that is, the measurements in the N-1 previous positions and in the current position are computed for the algorithm in each epoch). Of course, at the beginning of the procedure, when measurements have been taken in less than N different receiver positions, this set of states will have less than N receiver states (1 at the first position, 2 at the second position, and so on until measurements in N receivers positions have been made).

Each "factor" may contain:

one measurement, $y$;
the covariances matrix, $Q$, of such measurement (representing the noise level of the measurement);
one mathematical measurement model, $h(x_i, x_j)$, used to compute an expected measurement from the value of the states $x_i, x_j$ this factor is connected to. So, if the factor is for one magnetic field measurement (54), the states $x_i, x_j$ will be the transmitter state $x_0$ and the receiver state in the corresponding $n$-th position in the sliding window (with $1 \leq n \leq N$) of the receiver when the measurement was taken $(x_0, x_n)$, as this factor depends on both states; if the factor is IMU measurements or GNSS-TDCP displacements the states $x_i, x_j$ will be the receiver state in the $n$-th position and in the previous position $(x_n, x_{n-1})$, and if the factor is GNSS fix measurements, the state will be only one, the receiver state in the $n$-th position $(x_n)$;
one mathematical residual function $r(y, Q, x)$ to compute a residual (a.k.a. the weighted error). This involves the measurement, the measurement's covariance, and the measurement model.

In turn, measurements (y) of type magnetic field (54) may contain 3D magnetic field vector in local coordinates (in three orthogonal directions of a local reference frame also called local reference frame).

Measurements (y) of type IMU (55a) may contain: 3D position increment in local coordinates, 3D velocity increment in local coordinates and 3D orientation increment in local coordinates.

Measurements (y) of type TDCP GNSS (55b) may contain: 3D position increment (a.k.a. displacement vector) in global coordinates

And measurements (y) of type GNSS fix (55c) may contain: 3D position in global coordinates (i.e. in a global reference frame).

The above is a non-limitative example and the states and the factors in other embodiments different states and factors may be used.

In an embodiment, for each factor, given the model $h()$ and the magnitudes $y, Q$ and $x$, the residual r is computed as the estimation error $y - h(x_i, x_j)$ weighted by the measurement's covariance $Q$, according to this formula:

$$r(y, Q, X) = Q^{-T/2} * [y - h(x_i, x_j)]$$

where T is the transpose inverse of the matrix.

For notation purposes, we identify each factor with a different index $k$. There is exactly one factor for each individual measurement. If e.g. N=3, we have 3 magnetic factors (one for each position), 3 GNSS fix factors, 2 GNSS TDCP factors, and 2 IMU factors, for a total of 10 factors. They are numbered from k=1 to k=10. All the elements of the factor come identified with this same index. The residual above for a factor $k$ can therefore be rewritten as: $r(y_k, Q_k, X) = Q_k^{-T/2} * [y_k - h_k(x_{ik}, x_{jk})]$. Here, the double subindices in $x_{ik}$ and $x_{jk}$ refer to the fact that the two nodes $x_i$ and $x_j$ are different for each factor $k$.

Once the factor graph is established, an optimization process (algorithm) will be applied to find an optimal solution (an optimal value for the states).

Summarizing, this optimization consists in: having the measurements (IMU, GNSS, magnetic field), to find the value of the set of states X (positions of transmitter and receiver) that minimize the residual r.

Preferably, the optimization process should achieve the following objectives:

- Low power: It should exhibit low CPU demand to not compromise the battery life of the device.
- Convergence guarantees and speed: It must provide correct solutions in a time scale appropriate for the actions of the rescuer. To be practical, this solving time should be better than 200 milliseconds in the typical case and 1 second in the worst case.

In an embodiment the optimal solution is found by iterative nonlinear least squares optimization (other optimization techniques can be used), following the steps below. In an embodiment, the optimization process proceeds iteratively as follows (this is a non-limitative example and, in other embodiments, the optimization process can be made in a different way):

1. Establish an initial estimate for $X$ (set of states), name it $X_0$ and set the iteration count to $m = 0$.

2. Obtain the residual $r_k$ of each factor $k$:

$$r_k = r(y_k, Q_k, X) = Q_k^{-T/2} * [y_k - h_k (x_{ik}, x_{jk})]$$

with $X = X_m$, that is, the value of the set of states $(x_0, ..., x_N)$ in the iteration m.
Here $y_k$ will be the value of the measurement in this iteration for the factor k.

3. Obtain the Jacobian matrix blocks containing the derivatives of each residual $r_k$ with respect to each of its participating states $x_{ik}$, $x_{jk}$, obtaining $J_{ik}$ and $J_{jk}$ respectively.

4. Linearize each residual using the results of 2. and 3. That is:

$$r_k(\Delta X) = r_k + J_{ik}* \Delta x_{ik} + J_{jk}* \Delta x_{jk}$$

5. Compute the total cost function $C(\Delta X)$ by aggregating the squared norms of all linearized residuals. That is:

$$C(\Delta X) = \sum_{k=0}^{F} | rk(\Delta X)| = \sum_{k=0}^{F} | rk + Jik * \Delta xik + Jjk * \Delta xjk|$$

with $X = X_m$ and where F is the number of factors which have been taken into account (number of different type of measurements).
This can be written equivalently yet more compactly as:

$$C(\Delta X) = |r + J (\Delta X)|^2$$

where r is a stacked vector with all residuals $r_k$ computed in 2. and J is the derivative respect to X, a sparse Jacobian matrix containing all Jacobian blocks $J_{ik}$ and $J_{jk}$ computed in step 3.

6. Compute the optimal update step $\Delta X^*$ that minimizes the linearized costs.

$$\Delta X^* = \arg \min_{\Delta X} C(\Delta X) = \arg \min_{\Delta X} |r + J (\Delta X)|^2$$

The solution of this problem can be computed using the pseudo-inverse of J as:

$$\Delta X^* = -(J^T J)^{-1} J^T r$$

where the matrix $(J^T J)_{-1} J^T$ is the pseudo-inverse of J.

7. Update the optimal state and the iteration counter:

$$X_{m+1} = X_m + \Delta X^*$$

$$m = m+1.$$

8. Iterate from 2. until convergence.

This is only an example, but this optimization (and specifically the computation of steps 3 to 7) can be implemented in a number of alternative ways known in mathematics. Well-known algorithms such as the Gauss-Newton or Levenberg-Marquardt algorithms are applicable. Moreover, step 6 can be greatly optimized to avoid the costly computation of the pseudo-inverse of the Jacobian *J*. This usually involves a few non-trivial but well-known steps comprising matrix factorizations (e.g. the Cholesky factorization), matrix conditioning (e.g. damping the Hessian), and the like. Overall, these steps are used to both speed up the process and improve convergence and stability properties. In some embodiments, the algorithm can be substituted for example by a simpler Kalman Filter.
Also, in the case that some of the states in X comprise non-vectorial quantities such as rotation matrices to specify the 3D orientations and 3D orientation changes, some key algebraic operations above can be improved using elements of the Lie theory or Differential manifolds in mathematics, which are non-trivial but also well-known.

This iterative process is launched every epoch. In other words, periodically (every epoch) the different measurements are taken (in a different receiver position) and this optimization process is applied to obtain the required results (this period can be one second, five seconds, ten seconds or any other time period established by the user). The results may be used by the rescuer to move in the estimated direction of the victim to be closer to the victim in the next position where measurements are taken (next epoch).

The result is an optimal estimate of the vector $X=(x_0, ..., x_N)$, comprising optimal estimates of:

The transmitter's location and magnetic moment, $x_0$.
The receiver's consecutive locations and orientations, $(x_1, ..., x_N)$.

This procedure is repeated in different positions of the receiver until the victim is found or if, for any reasons, the rescuer decides to stop the search (and, for example, turns off the device).

At any moment, the location of the transmitter relative to the receiver can be computed from the optimal states of the transmitter and receiver, obtained from the optimization, by just performing standard frame transformation, known in 3D geometry, for example, with an operation of the following kind:

$$x_{trm}^{rec}=\text{relative\_pose } (x_{rec}, x_{trm})=\text{relative\_pose } (x_N, x_0).$$

where *trm* refers to the transmitter and *rec* refers to the receiver, and $x_{trm}^{rec}$ refers to the location of the transmitter relative to the receiver. In this case, it is used $x_N$ as the current state of the receiver and $x_0$ as the state of the transmitter. The function relative_pose ( ) is the generic function for frame transformation (also known as coordinates transformation or reference frame transformation).

The function can be implemented in different forms depending on if it is required a true 3D information, or the projection of this information on the horizontal plane. This is motivated by the different information that can be displayed in the different phases of the search. First, while still far from the victim, 2D representation can be used. In the surroundings of the victim, 3D representation is displayed to know not only the location of the victim in the horizontal plane but also in the vertical plane (i.e. the depth where the victim is located).

For example, for the 3D case, if the state of the receiver comprises position $p_{rec}$ and orientation (specifically an orientation rotation matrix $R_{rec}$) and the state of the transmitter comprises position $p_{trm}$, then the position of the transmitter relative to the receiver $p_{trm}^{rec}$ is computed with:

$$p_{trm}^{rec}=\text{relative\_pose } (p_{rec}, p_{trm})= R_{rec}^T (p_{trm}- p_{rec}).$$

This result $p_{trm}^{rec}$, that is the position of the transmitter relative to the receiver, is the most valued result of the algorithm and it is used to calculate and provide the main relevant information (and display it in the screen of the receiver and/or send it to other electronic devices). Among other interesting values, the following basic information can be easily computed and shown in the display (56) of the receiver:

- The position of the victim with respect to the rescuer. It can be indicated, for example, using a planar representation of the scene (see figure 4) by just extracting X and Y coordinates of the position $p_{trm}^{rec}$.

The distance d from the rescuer to the victim can be computed as

$$d=\| p_{trm}^{rec}\|=\text{sqrt}(p_x^2 + p_y^2 + p_z^2)$$

where $p_x$, $p_y$, $p_z$ are respectively the X, Y, and Z coordinates of $p_{trm}^{rec}$.

The direction that the rescuer needs to follow to approach the victim in a straight line can be indicated with an arrow whose angle $\phi$ from the forward direction can be computer as: $\phi=\arctan(p_y, p_x)$. This direction can be shown in the display, for example, with an arrow (see figure 5, display 56).

If the rescuer sets the receiver device close to the (snow) surface, and orients the device parallel to this surface with the screen facing up, the depth of burial of the victim perpendicularly to the snow surface can be computed with depth=- $p_z$.

Similarly, the depth of burial in a vertical line can be directly extracted from the Z coordinate of $p_{trm}$- $p_{rec}$.

The location of the victim can be shown on the screen as if the device were a camera that could "see" the victim under the snow. The 2D location of the victim on the screen is computed with the formula, well-known from computer vision,

$$u = K * \mathrm{p}_{trm}^{rec}$$

Where K is the intrinsic matrix of the virtual camera, comprising the geometrical parameters for the projection of the 3D relative transmitter's location onto the 2D image plane.

Additionally, in order to improve the visualization of the location of the victim relative to the rescuer, objects of known size representing the rescuer and the victim can be displayed. The size on the screen of such objects will increase as the distance to the transmitter decreases (according to the inverse of the distance), providing an intuitive 3D view of the situation to the rescuer. For example, the objects can be a sphere (e.g. of 10cm diameter) representing the size of the transmitter, and/or a sphere (e.g. of 1m diameter) representing the size of a human body; the projection of such 3D spheres on the screen result in circles of known radius.

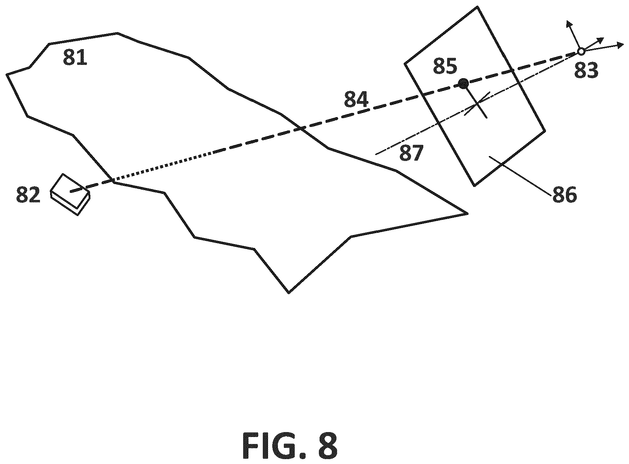

This is now explained based on figure 8, where it is schematically presented an scenario where a victim with a transmitter (82) is under the snow surface (81) and a rescuer with a receiver (83) is looking for the victim using the device and method proposed in this text. The view on the receiver screen is such that the victim appears on the screen as the rescuer points at it, like if the receiver were a camera that could "see" the victim beneath the snow. In order to do that, since the 3D position and orientation of the receiver is known, and the position of the emitter (82) is also known (thanks to the solution proposed in this text), it is easy to calculate the point (85) on the receiver screen (86) where the transmitter is projected, following the optical ray (84), which connects the receiver and the transmitter. In the screen, the projection point (85) is augmented with the projections (circles) of two spheres centered at the transmitter's location, of known size in 3D. If the rescuer approaches the victim, the distance decreases and the apparent sizes of the spheres (of the circles) grow following the inverse-distance law. If the user correctly points the receiver acting as a camera to the victim, it is possible to match the projection point (85) with a cross at the center of the screen, the cross representing the direction of the receiver optical axis (87). When the projection point (85) matches the cross (that is when the direction of the optical ray 84 and the direction of the receiver axis 87 are the same), the transmitter is exactly below the screen. When this happens, the receiver alerts the rescuer somehow, for example, highlighting the screen, showing a visual sign and/or emitting an audible signal. This represents the end of the search. The calculated depth of burial of the victim, can also be shown on the screen.

Hence, departing from the measurements obtained by the proposed receiver, an optimal accurate estimation of the position of the transmitter relative to the receiver is obtained. And several powerful visualizations are possible to provide the rescuer with clear and intuitive indications of where the victim is, both in 2D and in 3D.

This result exhibits the following properties:

The relative positions and orientations between receiver poses are very accurate, in the order of the accuracy of the TDCP displacements, which may be 1cm.

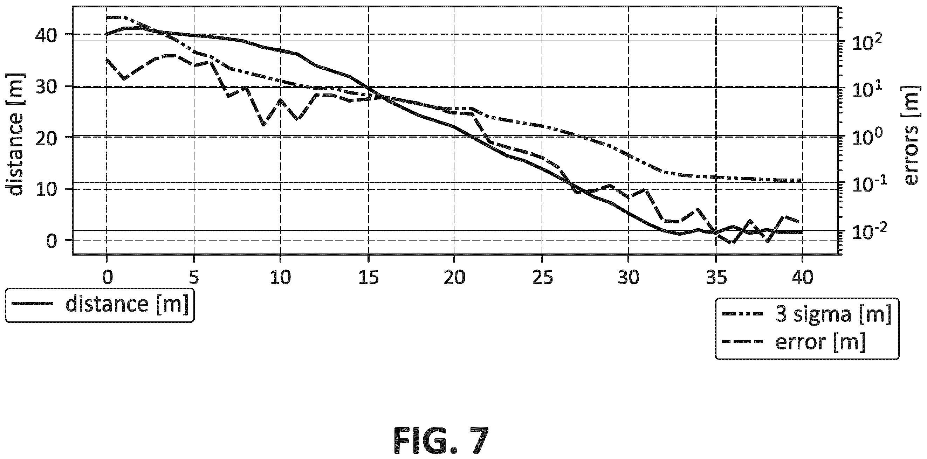

The relative position of the transmitter with respect to the receiver is, at the end of the search, also very accurate (for example to 1cm). This accuracy starts being poorer at a distance, in the order of a few meters, but it is sufficient to direct the rescuer towards the victim in a straight line in a direction that is off by typically less than 10 degrees. As the rescuer approaches the victim, the accuracy improves progressively until reaching the 1 cm level at the end of the search (see figure 7,). At this moment, only one probing point should be necessary for effectively entering in contact with the victim's body.

The absolute positions are less accurate, in the order of the accuracy of the GNSS fixes, which is typically 3m.

Crucially, the figure of merit that is relevant to our application is the relative solution (first two advantages), because the rescuer needs to find the victim relative to its own location, so that he/she can start the unburying operations at the exact location. This makes the utilization of raw carrier phase (TDCP) measurements an important element of the invention.

The performance of the proposed method, in a specific practical example, using the proposed device is sketched in figure 7. It shows the evolution of the localization error (dots: estimated error 95% percentile; dashed: true error). The distance to the victim is shown in solid line. The horizontal axis shows the number of receiver positions (the number of epochs). Initially, the measurements are too few and too noisy for a conclusive computation. The rescuer is directed along the magnetic field lines, as in the classical method, and the error is high. Once the measurements are rich enough, the computation concludes on a victim's location and the rescuer is directed towards it in a straight line.

Once in the vicinity of the victim, the accuracy of the victim's location relative to the rescuer is at the centimeter level. This includes a precise knowledge of the victim's location under the snow surface and its depth. The reported error is smaller than 1cm.

The computations shown in figure 7 encompass a sliding window of size N=20, and each epoch is solved with an average of 4 iterations (this is only a non-limitative example).

The description and drawings merely illustrate the principles of the invention. Although the present invention has been described with reference to specific embodiments, it should be understood by those skilled in the art that the foregoing and various other changes, omissions and additions in the form and detail thereof may be made therein without departing from the scope of the invention as defined by the following claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A method for detecting a buried victim, the method being performed by a receiver electronic device, and comprising the following steps:

   a) Measuring, at the current position of the receiver:

   a1) In three orthogonal directions of a local reference frame, a radiofrequency, RF, signal received from a transmitter electronic device attached to or carried by the buried victim, by an antenna of the receiver;
   a2) The current location of the receiver, by a GNSS device located in the receiver;
   a3) The raw carrier phase of the satellite signals received, by the GNSS device located in the receiver;
   a4) Acceleration and angular rate in the three orthogonal directions by an Inertial Measurement Unit, IMU, with 3 accelerometers and 3 gyroscopes, located in the receiver;

   b) Calculate the value of the following parameters: From the measurements made in step a1), the 3D magnetic field vector in the local reference frame; from the measurements made in step a2), 3D position of the receiver in a global reference frame; from the measurements made in step a3), 3D position increment of the receiver in the global reference frame by applying a time-differenced carrier phase, TDCP, technique to the raw carrier-phase measurements taken at the current position and at a previous position of the receiver; from the measurements made in step a4), 3D position and velocity increments of the receiver and 3D orientation increment of the receiver in the local reference frame;
   c) Taking into account values of the parameters obtained in step b) for the current position and for previous positions of the receiver, apply an optimization process to obtain an optimal estimation of the position of the transmitter and the position and orientation of the receiver;
   d) From said optimal estimation, calculate the estimated position of the transmitter relative to the receiver and, based on said estimated position, calculate and display in the receiver one or more of the following: position of the transmitter relative to the receiver in the horizontal plane or in 3D, estimated distance from the receiver to the transmitter, estimated straight line direction of the transmitter relative to the receiver and depth of the transmitter;
   e) If it is determined that the detection continues, once a certain pre-established time has passed from the taking of the measurements, repeat the method from step a).

2. A method according to any of the previous claims, where the optimization process is based on minimizing the residual between the values of the parameters calculated in step b) and expected values of said parameters obtained through measurement models, based on estimated positions of transmitter and receiver.

3. A method according to any of the previous claims, where the optimization process is a non-linear least squares optimization.

4. A method according to any of the previous claims, where if the number of different positions where the receiver has taken measurements according to step a), is less than N, all the previous positions of the receiver are taken into account in step c) and otherwise, only the N-1 previous positions are taken into account in step c), where N is a design parameter.

5. A method according to any of the previous claims, where measurements received, through a wireless communication network, from other receiver electronic devices also receiving the RF signal from the transmitter, are taken into account for calculating the parameters values in step b) or in the optimization process of step c).

6. A method according to any of the previous claims where, when the method is repeated from step a), the receiver is in a different position, which depends on the information displayed in the receiver in step d).

7. A method according to any of the previous claims, where in step b) the estimated magnetic moment of the transmitter is also obtained in step c).

8. A method according to any of the previous claims, where the RF signal is transmitted periodically by the transmitter located in the buried victim.

9. A method according to any of the previous claims, where it is determined that the detection continues, if the receiver user has not ordered the receiver to stop the detection method through an user interface of the receiver.

10. A method according to any of the previous claims, where the information calculated in step d) is sent to other electronic devices through a wireless communications network.

11. A method according to any of the previous claims, where the antenna of the receiver comprises 3 orthogonally-oriented wire coils over a ferrite nucleus.

12. A method according to any of the previous claims wherein, when the distance is more than a pre-established threshold, 2D representation of the estimated position is displayed and, otherwise, 3D representation of the estimated position is displayed.

13. An electronic device for detecting a buried victim, the device comprising:

    An antenna configured to measure a signal received from a transmitter carried by the buried victim, in three orthogonal directions of a local reference frame;
    A GNSS device configured to measure the current location of the receiver and the raw carrier phase of the satellite signals received;
    An IMU, comprising 3 accelerometers and 3 gyroscopes, configured to measure acceleration and angular rate in the three orthogonal directions of the local reference frame;
    An electronic processing unit configured to perform the following tasks:

        - Calculate the value of the following parameters:
        From the measurements provided by the antenna, the 3D magnetic field vector in the local reference frame; from the measurements provided by the GNSS device, 3D position of the receiver in a global reference frame and 3D position increment of the receiver in the global reference frame by applying a time-differenced carrier phase, TDCP, technique to the raw carrier-phase measurements taken at the current position and at a previous position of the receiver; and, from the measurements provided by the IMU, made in step a4) obtain 3D position and velocity increments of the receiver and 3D orientation increment of the receiver in the local reference frame;
        - Taking into account the values of the parameters obtained for a current position and previous positions of the receiver, apply an optimization process to obtain an optimal estimation of the position of the transmitter and the position and orientation of the receiver;
        - From said optimal estimation, calculate the estimated position of the transmitter relative to the receiver and, based on said estimated position, calculate and display in the receiver one or more of the following: position of the transmitter relative to the receiver in the horizontal plane or in 3D, estimated distance to the transmitter, estimated straight line direction of the transmitter relative to the receiver and depth of the transmitter;

    where the device is further configured to repeat the measurements and the above tasks, once a certain pre-established time has passed from the taking of the measurements until the device or the user determines that detection is stopped.

14. A system for detecting a buried victim, the system comprising an electronic device according to claim 13 and a transmitter electronic device carried by the buried victim and configured to transmit periodically a RF signal.

15. A non-transitory digital data storage medium for storing a computer program which comprises instructions causing an electronic device executing the program to perform the method according to any of the claims 1-12.

**FIG. 1**

FIG. 2

**FIG. 3**

**FIG. 4**

- 47 — Display and user interface
  - 80cm
  - 15,2m
  - sound
  - voice
- 48, 49
- 45 — CPU
  - 46 — algorithm
  - 42 — RF front end
  - 410 — GNSS front end
  - 411 — IMU front end
- coarse absolute receiver pose
- coarse absolute emitter position
- fine relative receiver-emitter position
- user input
- magnetic field 457kHz
- fix
- carrier phase
- acceleration
- ang velocity
- earth mag field
- 41 — 3D mag field antenna
- 43 — GNSS receiver
- 44 — IMU sensor

**FIG. 5**

FIG. 6

FIG. 7

**FIG. 8**

Europäisches
Patentamt

European
Patent Office

Office européen
des brevets

# EUROPEAN SEARCH REPORT

**Application Number**

EP 24 38 2890

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2024/035346 A1 (ORICA INT PTE LTD [SG]) 15 February 2024 (2024-02-15) * paragraphs [0002], [0012], [0014], [0076], [0077], [0079], [0080], [0088] * * paragraphs [0090], [0091], [0096], [0097], [0102], [0106], [0233], [0240], [0246] * ----- | 1-15 | INV. G01S19/14 G01S19/42 G01S19/43 G01S5/02 G01S3/04 A63B29/02 G01V3/08 G01V3/10 G01V3/165 |
| A | US 9 351 106 B2 (MARKHAM ANDREW [GB]; TRIGONI NIKI [GB] ET AL.) 24 May 2016 (2016-05-24) * the whole document * ----- | 1-15 | |

**TECHNICAL FIELDS SEARCHED (IPC)**

A63B
G01S
G01V

The present search report has been drawn up for all claims

| Place of search | Date of completion of the search | Examiner |
|---|---|---|
| Munich | 22 January 2025 | Naddeo, Giovanni |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

 

& : member of the same patent family, corresponding
  document

EPO FORM 1503 03.82 (P04C01)

**EP 4 692 855 A1**

## ANNEX TO THE EUROPEAN SEARCH REPORT
## ON EUROPEAN PATENT APPLICATION NO.

EP 24 38 2890

22-01-2025

| Patent document cited in search report | Publication date | Patent family member(s) | Publication date |
|---|---|---|---|
| WO 2024035346 A1 | 15-02-2024 | NONE | |
| US 9351106 B2 | 24-05-2016 | AU 2012226550 A1 | 24-10-2013 |
| | | CA 2829286 A1 | 13-09-2012 |
| | | CN 103518408 A | 15-01-2014 |
| | | EP 2684406 A1 | 15-01-2014 |
| | | GB 2488897 A | 12-09-2012 |
| | | GB 2488898 A | 12-09-2012 |
| | | GB 2488899 A | 12-09-2012 |
| | | US 2014155098 A1 | 05-06-2014 |
| | | WO 2012120302 A1 | 13-09-2012 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9310460 B2

**Non-patent literature cited in the description**

- **P. PINIES**. Localization of avalanche victims using robocentric SLAM. *2006 IEEE/RSJ International Conference on Intelligent Robots and Systems*